# EUROPEAN PATENT SPECIFICATION

(11) **EP 0 861 583 B1**
(45) Date of publication and mention of the grant of the patent: **02.01.2002**
(21) Application number: 98200141.4
(22) Date of filing: 20.01.1998
(51) Int. Cl.: A01D 45/02

(54) **Corn header auger trough divider.**
Teiler des Fördertrogs der Einzugsschnecke von Maispflückvorsatz
Diviseur de l'auge d'une vis sans fin de cueilleur de mais

(30) Priority: 31.01.1997 US 792021
(43) Date of publication of application: 02.09.1998
(73) Proprietor: NEW HOLLAND BELGIUM N.V., B-8210 Zedelgem (BE)
(72) Inventor: Rayfield, James F., New Holland, PA 17557 (US)
(74) Representative: Vandenbroucke, Alberic

(56) References cited:
- EP-A- 0 502 653
- EP-A- 0 780 050
- DE-A- 3 623 380
- DE-U- 9 316 683
- US-A- 2 390 680
- US-A- 3 794 046
- US-A- 4 003 191
- US-A- 4 903 466

## Description

The present invention relates to agricultural headers for use in harvesting row crops such as corn. More particularly, it relates to row crop headers equipped with a plurality of row units and a transverse auger which is installed in a transverse auger trough.

Mechanical harvesting of corn has taken place for decades. However, efforts continue in the attempt to make corn harvest operations more efficient and effective. A corn harvester generally is equipped with a corn header which removes the ears from the stalks. The ear of corn is then fed into a separator or thresher which separates the corn kernels from all other materials. A corn header commonly comprises a plurality of row assemblies, one for each row which is being harvested in the same pass over the field. Typically each divider covers a pair of stalkrolls, stripper plates, gathering chains and gear boxes. After the stalkrolls and stripper plates removed the ear from the cornstalk, the gathering chains lift and push the ear into an auger trough of the corn header. Typically, the trough is contoured to receive a larger quantity of corn ears. Above the trough of the corn header is a transverse auger, having two sets of helical flighting affixed thereto. A left-handed flighting pushes the corn in the trough from the left side of the corn header to the centre of the corn header. A right-handed flighting pushes the corn in the trough from the right side of the corn header to the centre of the corn header. Located at the centre of the corn header is the opening to the elevator or feeder house of the harvester. The corn ears are forced into the feeder house opening. The feeder house lifts the ears into the threshing and separation areas of the combine. The corn is separated from the ear and husk by a threshing rotor.

Currently, there are several drawbacks to the conventional corn header. Specifically, it is difficult to re-orient the flow of the corn travelling in an auger trough. After the gathering chains conveyed the corn crop into the auger trough, the transverse auger pushes the crop along its transverse axis. Once the corn crop reaches the centre of the corn header, it must be redirected into the feeder house opening. However, as the flightings push the corn ears into the centre of the corn header, the corn flow gains momentum. The corn ears from the right side of the corn header and those from the left side impact at the corn header centre. Frequently some of the corn ears are pushed to the opposing side of the corn header, flipped over the top of the top of the transverse auger or thrown out of the corn header altogether.

Several measures have been taken to minimise the loss of the corn ears. First, the rate at which the corn crop is cut can be reduced, thus limiting the corn flow entering the corn header to manageable rate. However, this increases the duration of harvesting operations. Second, several fingers have been inserted through the cylindrical body of the transverse auger in front of the opening to the feeder house. These fingers push the crop into the feeder house. However, these fingers can damage the corn ears. Attempts to minimise the contact of the fingers on the corn ears have resulted in many patents.

The prior art illustrates these and additional difficulties. US-A-3,503,190 discloses a harvesting machine with a corn header having two portions which pivot around a central 'elongated' element. The portions are designed to be folded at the pivot during transport. Unfortunately, it is necessary to duplicate drive mechanisms for the transverse auger and there is no provision for an attachment used on the existing corn headers.

US-A-3,794,046 discloses a header crop divider for an axial flow combine having side-by-side axial flow units. A cutting means is affixed to the transverse auger. Channel members with a knife section are affixed to the corn header trough. These knives cut the crop as it approaches the centre of the corn header. The main drawback to this approach is that it damages the crop. Further this approach has a limited ability to redirect the flow of corn crop towards the feeder house opening.

US-A-3,244,271 discloses an auger for axially moving and laterally discharging material. The transverse auger has a two cone portions located at the auger's centre. The cones restrict the crop flow and force the flow into the feeder house opening. However, modifying the transverse auger is costly and the crop is damaged by the cones also. Further, such an approach may be ineffective for corn ears.

US-A-4,617,787 discloses a combine harvester machine and a grain header with several conveyors for pushing the crop into the auger trough. This mechanism is mechanically complex. Further it is unclear whether the design can accommodate the row dividers of a corn header. Also the dividers into this device are actually the covering of the conveyor mechanism.

EP-A-0,502,653 relates to a corn header for a forage harvester. The corn stalks are delivered by a plurality of row units to a converging auger which conveys the crop to an outlet at the centre of the header. The auger is provided with an auger trough which has at its centre a filler ramp which guides the harvested crop material rearwardly towards the inlet. This filler ramp ends halfway below the auger, such that the material which reaches the rear half of the auger trough still can migrate sideways between the inner ends of the auger flights. Consequently no even distribution of the crop at the inlet of the harvester can be guaranteed. This problem is not prominent when the whole crop is processed as in forage harvesters, but it becomes apparent when only the corn ears are fed into the machine as in combine harvesters.

Consequently, the need exists for a corn header which ensures the smooth and even flow of corn ears from the auger trough into the feeder house opening.

According to the invention, there is provided a row crop header for attachment to a harvester, said header comprising:
a plurality of row units, each unit operable to harvest one row of said row crop standing in the field and to convey harvested crop material rearwardly;
a generally transverse trough located behind said row units for receiving said harvested crop material and having an outlet opening for registering with an inlet of said harvester;
transverse conveying means positioned in said trough for effecting therein a generally transverse flow of said harvested crop material in the direction of said outlet opening; and
a trough divider installed in said trough for directing said generally transverse flow rearwardly and into said outlet opening,
characterised in that said trough divider extends the width of said trough from front to back and comprises a front divider and a rear divider.

Such trough divider can smoothly alter the flow of corn ears traveling in the auger trough and into the feeder house opening. It dispenses with the need for attachments to or fingers through the body of an auger for redirecting the crop flow at the height of the corn header outlet.

The front and rear divider may comprise a plurality of tabs, which are affixed to the trough. Thereby the divider can be easily and inexpensively installed onto an existing corn header trough.

The bottom section of the divider may be curved to conform to the curved contours of an existing corn header trough.

The row units may be bridged by row dividers and the trough divider may be installed between one of the row dividers (preferably the central row divider) and the outlet opening of the header.

The transverse conveying means may comprise a generally transverse auger and the trough divider may be affixed beneath said auger, preferably without contacting the auger flights and in front of the feeder house opening.

Such corn header can be attached to a combine harvester, e.g. a twin rotor combine, for threshing the harvested corn.

An embodiment of the present invention will now be described in further detail, by way of example, with respect to the following drawings, in which:
Figure 1 is a general view of a corn harvester with a corn header according to the present invention;

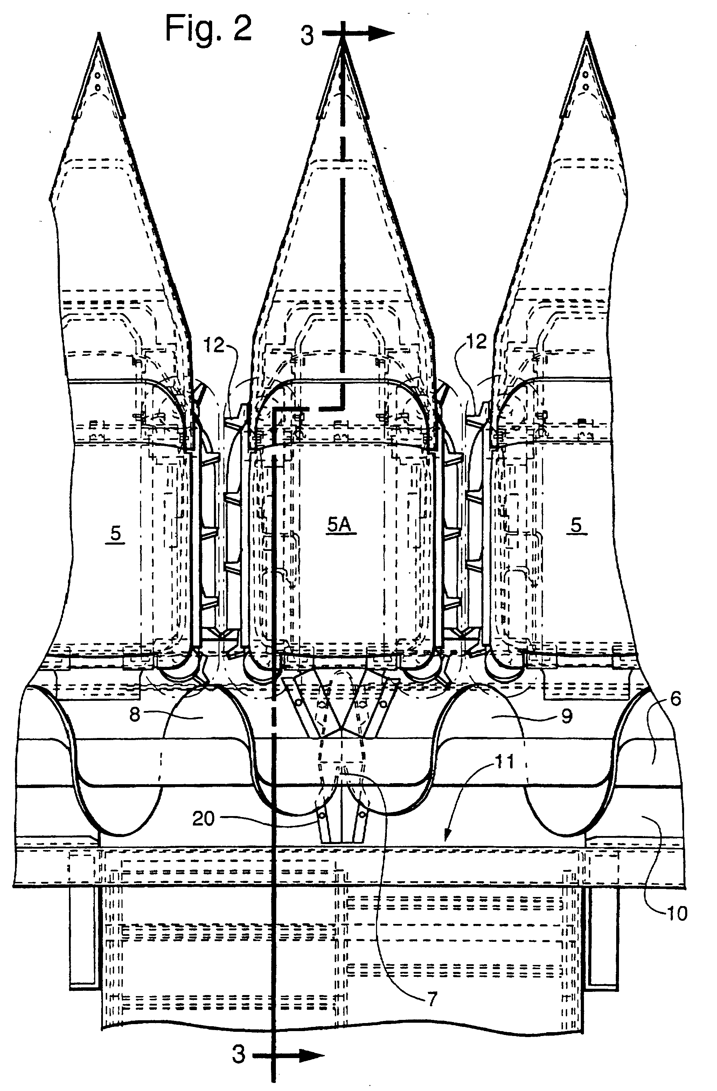

Figure 2 is an enlarged plan view taken in the direction of arrows 2-2 of Fig. 1, showing the corn header auger trough, the feeder house opening, a row divider and an auger trough divider;

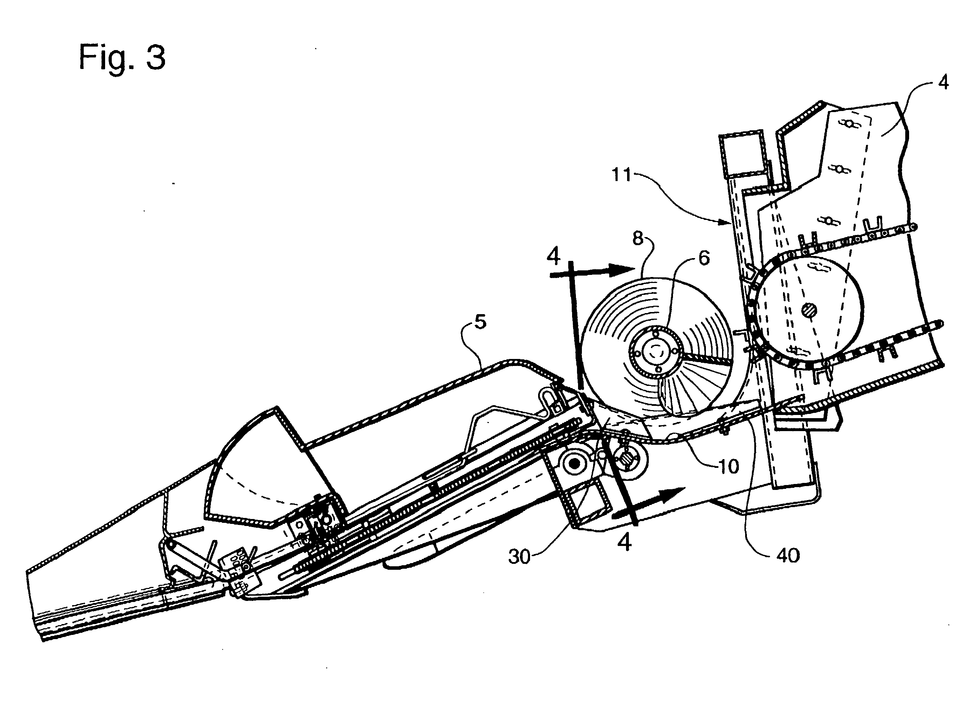

Figure 3 is a sectional side view taken along line 3-3 of Fig. 2 and showing the auger trough, feeder house opening, the row divider and the auger trough divider;

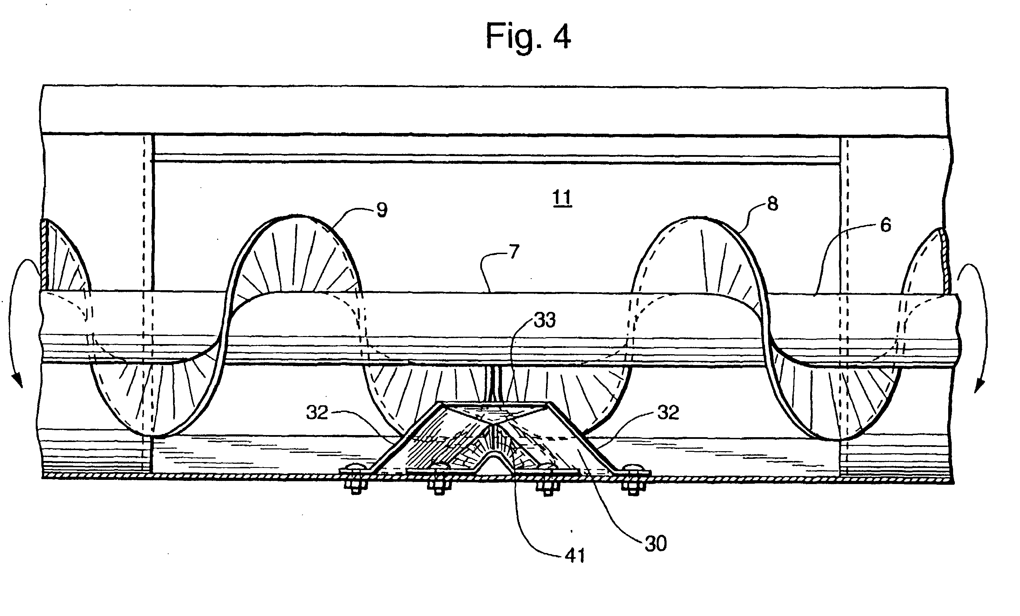

Figure 4 is an enlarged sectional view taken along line 4-4 of Fig. 3, showing the front divider, the transverse auger and the auger trough; and
Figure 5 is an enlarged overhead view showing the flow of the corn crop from the gathering chains to the feeder house opening.

Throughout the following description, left and right references are used as a matter of convenience and are determined by standing at the rear of the combine and facing the forward end in the normal direction of travel. Likewise, forward and rearward are determined with reference to the normal direction of travel of the harvester. Upward or downward orientations are relative to the ground or operating surface. Horizontal or vertical planes are also relative to ground.

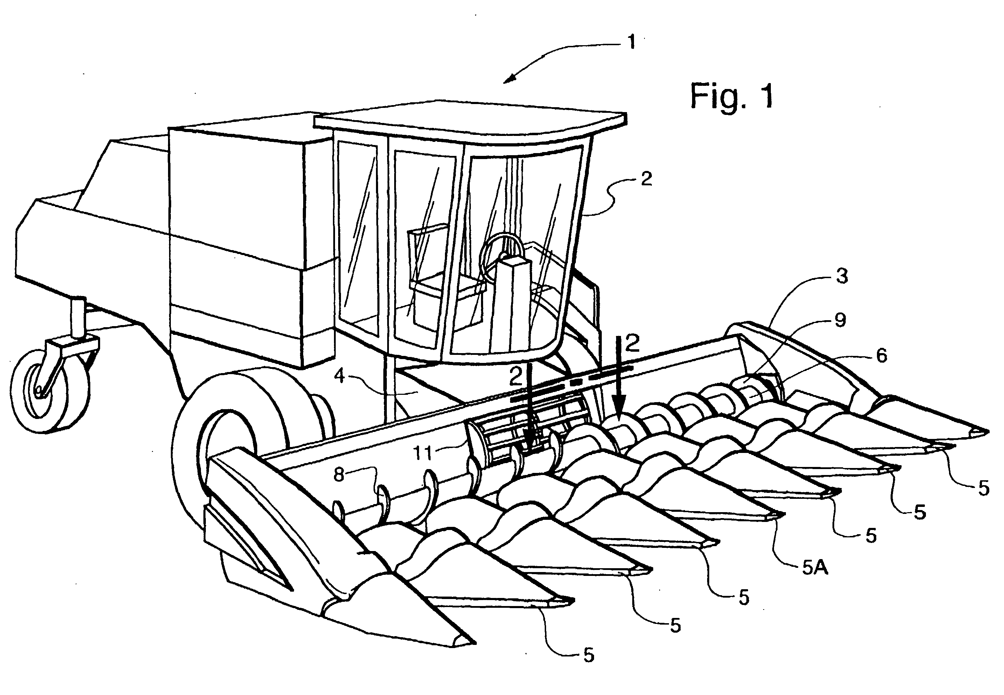

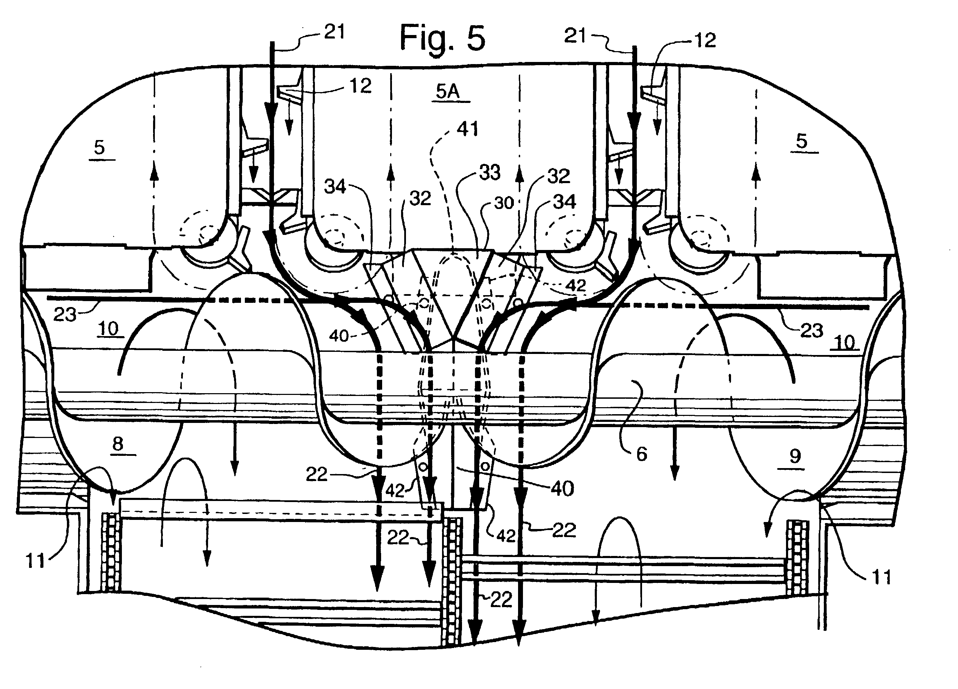

Figure 1 illustrates a corn harvester, more particularly a twin rotor combine 1, equipped with a corn header 3. Typically, the combine 1 has a feeder house 4 or elevator to which the corn header 3 is attached. The corn header is provided with a plurality of row units, which are bridged by row dividers 5, which are moved between rows of corn. The corn stalks are drawn rearward by a front auger and then engaged by a stalkroll of a row unit. Gathering chains 12 feed the ear of corn backwards (flow line 21 in Figure 5) and into an auger trough 10 (sometimes referred to as header floor). A transverse auger 6 with a left-handed flighting 8 and a right-handed flighting 9 is located above the auger trough 10. The transverse auger flighting (8 or 9) moves the corn into the centre 7 of the corn header in front of an outlet opening, registering with the opening 11 of the feeder house opening 4. The ears of corn are moved through the feeder house 4 into a threshing system located in the combine 1 for separating the corn kernels from the ears. The kernels of corn are then moved and stored in a grain tank located at the top of the combine. These are discharged later. Straw, chaff and other trash material are discharged from the rear of the combine 1. An operator drives the combine from a glass cab 2 with a chair and steering column. From the cab, the operator can observe and control most of the functions of the corn header 3 and the combine 1.

An auger trough divider 20 is located at the centre 7 of the outlet opening of the corn header 3 within the auger trough 10. The divider 20 is positioned in front of the feeder house opening 11 and behind the centre row divider 5A. The trough divider 20 is designed to re-orient the transverse crop flow 23 to a rearward crop flow 22. A rearward crop flow 22 results in a more effective entrance of the crop into the feeder house opening 11.

The divider 20 actually comprises two elements: a front divider 30 and a rear divider 40. The rear divider 40 extends the width of the auger trough 10 from front to back. The base of the rear divider 40 is contoured to fit in the auger trough 10. There are four rear tabs 42 which can be altered to match the slope of the auger trough 10. Openings in each rear tab 42 allow a fastener to be inserted for attachment of the rear divider 40 to the auger trough 10. The rear divider 40 is placed beneath the transverse auger 6. The flighting 8 or 9 at the centre of the transverse auger 6 may be trimmed or reduced so as to not contact the top of the rear divider 40. The rear divider 40 is centred directly behind the centre row divider assembly 5A. The rear divider 40 also is centred on the feeder house opening 11. This location splits the crop flow evenly. The crop from the left side of the corn header 3 can flow into the left side of the feeder house opening 11. In a twin rotor combine, the crop from the left side will be threshed and separated by the left rotor. Likewise the crop from the right side of the corn header is processed by the right rotor. This helps ensure a more balanced distribution of the crop throughout the entire threshing system.

The front divider 30 is located just behind the centre row divider 5A. A portion of the rear divider 40 is nested at location 41 within the front divider 30. The front divider 30 has two front tabs 34 at its base for fastening the front divider 30 to the auger trough 10. Again, the front tabs 34 are designed to match the contour of the auger trough 10. The top portion 33 of the front divider 30 is triangularly shaped and is positioned generally horizontal to the ground. Attached to the top portion 33 are a pair of generally rectangularly shaped side embankments 32. The side embankments 32 are generally upright and divert the transverse crop flow 23 along the auger axis to a rearward crop flow 22, directly ('rearward travel') into the opening 11 of the feeder house 4. Again, like the rear divider 40, the front divider 30 does not contact the flighting 8 or 9 on the transverse auger 10. Also the front divider 30 is centred on feeder house opening 11.

In operation, the corn header 3 passes over rows of corn crop. The processing apparatus of the row units, within the row dividers 5, cut the corn stalks and remove the ears therefrom. The gathering chains 12 then push the corn ears 21 into the auger trough 10. The flighting 8 or 9 on the transverse auger 6 moves the corn ears into the centre 7 of the corn header 3. The corn ears first contact the side embankment 32 of the front divider 30 and then proceed towards the rear divider 40 and into the feeder house opening 11. A conveyor in the feeder house 4 then carries the corn ears into the threshing and separating rotors within the combine 1.

The divider according to the present embodiment of the invention is designed to be used in conjunction within an auger trough of a conventional corn header. However, the divider could be installed on similar configurations for harvesting other crops such as sunflowers.

It will be obvious to those skilled in the art that various changes may be made without departing from the scope of the invention as this is defined in the claims.

## Claims

1. A row crop header (3) for attachment to a harvester (1), said header (3) comprising:
a plurality of row units, each unit operable to harvest one row of said row crop standing in the field and to convey harvested crop material rearwardly;
a generally transverse trough (10) located behind said row units for receiving said harvested crop material and having an outlet opening for registering with an inlet (11) of said harvester (1);
transverse conveying means (6) positioned in said trough (10) for effecting therein a generally transverse flow (23) of said harvested crop material in the direction of said outlet opening; and
a trough divider (20) installed in said trough (10) for directing said generally transverse flow (23) rearwardly and into said outlet opening,
**characterised in that** said trough divider (20) extends the width of said trough (10) from front to back and comprises a front divider (30) and a rear divider (40).

2. A header according to claim 1, **characterised in that** said row units are bridged by row dividers (5) and said trough divider is affixed to the trough (10) between one (5A) of said row dividers (5) and said outlet opening.

3. A header according to claim 1 or 2, **characterised in that** said rear divider (40) is partially nested within said front divider (30).

4. A header according to any of the preceding claims, **characterised in that** said trough divider (20) comprises a top region (33).

5. A header according to claim 4, **characterised in that** said trough divider (20) comprises a plurality of generally upright side embankments (32), which are affixed to said top region (33) and extend towards said outlet opening.

6. A header according to claim 5, **characterised in that** said side embankments (32) comprise tabs (34) which are affixed to the trough (10).

7. A header according to claim 5 or 6, **characterised in that** said top region (33) is generally triangularly shaped and said side embankments (32) are generally rectangularly shaped.

8. A header according to any of the preceding claims, **characterised in that** said transverse conveying means comprise a generally transverse auger (6) and said trough divider (20) is affixed to the trough (10) generally beneath said auger (6).

9. A header according to claim 8, **characterised in that** said auger (6) does not contact said trough divider (20).

10. A header according to claim 8 or 9, **characterised in that** said auger (6) comprises a left-handed flighting (8) and a right-handed flighting (9), and said trough divider (20) is located between said left-handed flighting (8) and said right-handed flighting (9).

11. A header according to claim 10, **characterised in that** both flightings (8, 9) end near the centre (7) of said outlet opening.

12. A header according to any of the preceding claims, **characterised in that** said trough (10) is curved and the bottom section of said trough divider (20) matches this curve.

13. A header according to claim 12, **characterised in that** said trough divider (20) comprises a plurality of tabs (34, 42), which are affixed to said trough (10).

14. A header according to any of the preceding claims, **characterised in that** said row units comprise a stalkroll, a stripper plate, a gathering chain (12) and a gear box.

## Patentansprüche

1. Reihenfrucht-Vorsatzgerät (3) zur Befestigung an einer Erntemaschine (1), wobei das Vorsatzgerät (3) folgendes umfaßt:
eine Mehrzahl von Reiheneinheiten, wobei jede Einheit zum Ernten einer Reihe der auf dem Feld stehenden Reihenfrucht und zur Förderung des geernteten Erntematerials in Rückwärtsrichtung betreibbar ist,
einen sich allgemein in Querrichtung erstreckenden Trog (10), der hinter den Reiheneinheiten angeordnet ist, um das geemtete Erntematerial aufzunehmen, und der eine Auslaßöffnung zur Ausrichtung mit einem Einlaß (11) der Erntemaschine (1) aufweist,
sich in Querrichtung erstreckende Fördereinrichtungen (6), die in dem Trog (10) angeordnet sind, um in diesem eine allgemein in Querrichtung gerichtete Strömung (23) des geernteten Erntematerials in Richtung auf die Auslaßöffnung zu bewirken, und
einen Trogteiler (20), der in dem Trog (10) eingebaut ist, um die allgemein in Querrichtung gerichtete Strömung (23) in Rückwärtsrichtung und in die Auslaßöffnung zu lenken,
**dadurch gekennzeichnet, daß** der Trogteiler (20) sich über die Breite des Troges (10) von der Vorderseite zur Rückseite erstreckt und einen vorderen Teiler (30) und einen hinteren Teiler (40) umfaßt.

2. Vorsatzgerät nach Anspruch 1, **dadurch gekennzeichnet, daß** die Reiheneinheiten durch Reihenteiler (5) überbrückt sind, und daß der Trogteiler an den Trog (10) zwischen einem (5A) der Reihenteiler (5) und der Auslaßöffnung befestigt ist.

3. Vorsatzgerät nach Anspruch 1 oder 2, **dadurch gekennzeichnet, daß** der hintere Teiler (40) teilweise in den vorderen Teiler (30) eingesetzt ist.

4. Vorsatzgerät nach einem der vorhergehenden Ansprüche, **dadurch gekennzeichnet, daß** der Trogteiler (20) einen oberen Bereich (33) umfaßt.

5. Vorsatzgerät nach Anspruch 4, **dadurch gekennzeichnet, daß** der Trogteiler (20) eine Anzahl von allgemein aufrechtstehenden Seitenböschungen (32) umfaßt, die an dem oberen Bereich (33) befestigt sind sich in Richtung auf die Auslaßöffnung erstrecken.

6. Vorsatzgerät nach Anspruch 5, **dadurch gekennzeichnet, daß** die Seitenböschungen (32) Laschen (34) umfassen, die an dem Trog (10) befestigt sind.

7. Vorsatzgerät nach Anspruch 5 oder 6, **dadurch gekennzeichnet, daß** der obere Bereich (33) allgemein dreieckförmig ist, und daß die Seitenböschungen (32) allgemein rechtwinklig geformt sind.

8. Vorsatzgerät nach einem der vorhergehenden Ansprüche, **dadurch gekennzeichnet, daß** die sich in Querrichtung erstreckenden Fördereinrichtungen eine sich allgemein in Querrichtung erstreckende Förderschnecke (6) umfassen, und daß der Trogteiler (20) an dem Trog (10) allgemein unterhalb der Förderschnecke (6) befestigt ist.

9. Vorsatzgerät nach Anspruch 8, **dadurch gekennzeichnet, daß** die Förderschnecke (6) nicht mit dem Teiler (20) in Berührung kommt.

10. Vorsatzgerät nach Anspruch 8 oder 9, **dadurch gekennzeichnet, daß** die Förderschnecke (6) eine linksgängige Beschaufelung (8) und eine rechtsgängige Beschaufelung (9) aufweist, und daß der Trogteiler (20) sich zwischen der linksgängigen Beschaufelung (8) und der rechtsgängigen Beschaufelung (9) befindet.

11. Vorsatzgerät nach Anspruch 10, **dadurch gekennzeichnet, daß** beide Beschaufelungen (8, 9) in der Nähe der Mitte (7) der Auslaßöffnung enden.

12. Vorsatzgerät nach einem der vorhergehenden Ansprüche, **dadurch gekennzeichnet, daß** der Trog (10) gekrümmt ist, und daß der untere Abschnitt des Trogteilers (20) an diese Krümmung angepaßt ist.

13. Vorsatzgerät nach Anspruch 12, **dadurch gekennzeichnet, daß** der Trogteiler (20) eine Anzahl von Laschen (34, 42) aufweist, die an dem Trog (10) befestigt sind.

14. Vorsatzgerät nach einem der vorhergehenden Ansprüche, **dadurch gekennzeichnet, daß** die Reiheneinheiten eine Pflückwalze, eine Abstreifplatte, eine Einzugskette (12) und ein Getriebegehäuse umfassen.

## Revendications

1. Récolteur (3) de plantes en rangs destiné à être fixé à une moissonneuse (1), ledit récolteur (3) comprenant:
une pluralité d'unités de rangs, chaque unité étant à même de récolter un rang dudit matériau de récolte en rangs sur pied dans le champ et de transporter le matériau de récolte récolté vers l'arrière;
un couloir (10) généralement transversal situé derrière lesdites unités de rangs afin de recevoir ledit matériau de récolte récolté, et possédant un orifice d'évacuation (11) tel qu'il coïncide avec une entrée de ladite moissonneuse (1);
des moyens transversaux de transport (6) positionnés dans ledit couloir (10) afin d'y réaliser un flux généralement transversal (23) dudit matériau de récolte dans le sens dudit orifice d'évacuation; et un diviseur de couloir (20) installé dans ledit couloir (10) afin d'orienter, vers l'arrière et dans ledit orifice d'évacuation, ledit flux généralement transversal (23),
**caractérisé en ce que** ledit diviseur (20) de couloir excède la largeur dudit couloir (10) de l'avant vers l'arrière, et comprend un diviseur avant (30) et un diviseur (40) arrière.

2. Récolteur selon la revendication 1, **caractérisé en ce que** lesdites unités de rangs sont réunies par des diviseurs de rangs (5) et ledit diviseur de couloir est fixé au couloir (10) entre un (5A) desdits diviseurs de rangs (5) et ledit orifice d'évacuation.

3. Récolteur selon la revendication 1 ou 2, **caractérisé en ce que** ledit diviseur arrière (40) est partiellement emboîté dans ledit diviseur avant (30).

4. Récolteur selon l'une quelconque des revendications précédentes, **caractérisé en ce que** ledit diviseur de couloir (20) comprend une zone supérieure (33).

5. Récolteur selon la revendication 4, **caractérisé en ce que** ledit diviseur de couloir (20) comprend une pluralité de talus latéraux (32) généralement dirigés vers le haut qui sont fixés à ladite zone supérieure 33 et s'étendent vers ledit orifice d'évacuation.

6. Récolteur selon la revendication 5, **caractérisé en ce que** lesdits talus latéraux (32) comprennent des languettes (34) fixées au couloir (10).

7. Récolteur selon la revendication 5 ou 6, **caractérisé en ce que** ladite zone supérieure (33) est généralement de forme triangulaire et lesdits talus latéraux (32) sont généralement de forme rectangulaire.

8. Récolteur selon l'une quelconque des revendications précédentes, **caractérisé en ce que** lesdits moyens transversaux de transport comprennent une vis généralement transversale (6) et ledit diviseur de couloir (20) est fixé au couloir (10) généralement sous ladite vis (6).

9. Récolteur selon la revendication 8, **caractérisé en ce que** ladite vis (6) ne touche pas ledit diviseur de couloir (20).

10. Récolteur selon la revendication 8 ou 9, **caractérisé en ce que** ladite vis (6) comprend une hélice gauche (8) et une hélice droite (9), et ledit diviseur de couloir (20) est situé entre ladite hélice gauche (8) et ladite hélice droite (9).

11. Récolteur selon la revendication 10, **caractérisé en ce que** les deux hélices (8, 9) se terminent à proximité du centre (7) dudit orifice d'évacuation.

12. Récolteur selon l'une quelconque des revendications précédentes, **caractérisé en ce que** ledit couloir (10) est incurvé et que la section inférieure dudit diviseur de couloir (20) correspond à cette courbe.

13. Récolteur selon la revendication 12, **caractérisé en ce que** ledit diviseur de couloir (20) comprend une pluralité de languettes (34, 42), fixées audit couloir (10).

14. Récolteur selon l'une quelconque des revendications précédentes, **caractérisé en ce que** lesdites unités de rangs comprennent un rouleau de tiges, une plaque d'arrachage, une chaîne de rassemblement (12) et un carter d'engrenages.
